# EUROPEAN PATENT APPLICATION

(11) **EP 2 605 492 A1**
(43) Date of publication of application: **19.06.2013**
(21) Application number: 11193784.3
(22) Date of filing: 15.12.2011
(51) Int. Cl.: H04M 1/60, H04M 1/725, H04R 25/00

(54) **Mobile bluetooth device**

(71) Applicant: Oticon A/S, 2765 Smørum (DK)
(72) Inventor: Aldaz, Gabriel, DK-2765 Smørum (DK); Sapiezyñski, Piotr, DK-2765 Smørum (DK)

(57) **Abstract**

Mobile Bluetooth device (100) for engaging in a wireless Bluetooth connection to a first Bluetooth terminal (210) located at a first location (211) and to a second Bluetooth terminal (220) located at a second location (221) spaced apart from said first location (211), wherein the mobile Bluetooth device (100) has been previously paired with said first (210) and second (220) Bluetooth terminals and comprises a comparator (20) adapted to determine a spatial relationship between a current device location (121) of the mobile Bluetooth device (100) and the first (211) and second (221) locations, a selector (30) adapted to select from the first (210) and second (220) Bluetooth terminals a designated Bluetooth terminal by evaluating the spatial relationship determined by the comparator (20), and a controller (40) adapted to initiate a reconnection between the mobile Bluetooth device (100) and the designated Bluetooth terminal selected by the selector (30).

## Description

### TECHNICAL FIELD

The present invention is related to a mobile Bluetooth device for engaging in a wireless Bluetooth connection to a first Bluetooth terminal disposed at a first location and to a second Bluetooth terminal disposed at second location spaced apart from said first location. The present invention is furthermore related to a corresponding operation method and computer program for operating a mobile Bluetooth device.

### BACKGROUND ART

Mobile Bluetooth devices such as Smartphones, hearing devices, hearing aids or hearing-aid streamers (gateway devices for relaying audio signals between a hearing aid and an arbitrary source, for example disclosed in EP 1 981 253 A1) as well as Bluetooth terminals such as landline phone adapters or TV adapters are known from the prior art. Prior to establishing a secured communication connection between - for example - a hearing aid and a landline phone adapter, the devices require to be paired, essentially meaning that both devices have to store a common link key. If a thus established secured communication connection is subsequently disconnected, the two devices are considered to have been previously paired. The just described pairing process is known from the prior art as well.

It is an object of the invention to provide an alternative Bluetooth device for engaging in a wireless Bluetooth connection and a corresponding method and computer program for operating a mobile Bluetooth device.

### DISCLOSURE OF INVENTION

According to a first aspect of the invention, the object is achieved by a mobile Bluetooth device for engaging in a wireless Bluetooth connection to a first Bluetooth terminal disposed at a first location and to a second Bluetooth terminal disposed at second location spaced apart from said first location, wherein the mobile Bluetooth device has been previously paired with said first and second Bluetooth terminals and comprises:
- a comparator adapted to determine a spatial relationship between a current device location of the mobile Bluetooth device and the first and second locations;
- a selector adapted to select from the first and second Bluetooth terminals a designated Bluetooth terminal by evaluating the spatial relationship determined by the comparator; and
- a controller adapted to initiate a reconnection between the mobile Bluetooth device and the designated Bluetooth terminal selected by the selector.

The present invention recognizes that with an ever increasing number of Bluetooth terminals a mobile Bluetooth device is to be connected to, users find themselves easily frustrated by lost connections and lost pairings. This is because the reconnection of a mobile Bluetooth device to one of a number of Bluetooth terminals in the vicinity results in long connection times or even requires manoeuvring through Bluetooth setup lists manually. The present invention also recognizes that this is especially unfavourable when using a hearing aid or a hearing-aid streamer, since in this case the user (which may be of any age and technical skill) is very much dependent on a mobile Bluetooth device to connect fast and easy.

According to the present invention it is suggested to determine a spatial relationship between a mobile Bluetooth device and number of Bluetooth terminals to allow, through evaluation of said spatial relationship, for an automatic reconnection of the mobile Bluetooth device to one of the number of Bluetooth terminals.

In the following, embodiments of the first aspect of the invention are described. Additional features explained in the context of different embodiments may be combined with each other to form further embodiments, as long as they are not explicitly described as forming mutually exclusive alternatives to each other.

In a preferred embodiment the mobile Bluetooth device comprises a memory adapted to store a location of a Bluetooth terminal the mobile Bluetooth device has been previously paired with. A location may be stored together with a unique identifier of a Bluetooth terminal, preferably a MAC address. A location may be expressed as absolute coordinates. A location may also be stored together with a vicinity of a Bluetooth terminal in terms of absolute coordinates. A respective location may also be expressed using identifiers such as "at home" or "at work". A mobile Bluetooth device that has been previously paired with a first Bluetooth terminal located "at home" and with a second Bluetooth terminal located "at work" holds this information accessible in a memory. Thereby the mobile Bluetooth device, for example being located "at home" itself, is advantageously furnished to select the first Bluetooth terminal as connection partner and to rule out the second Bluetooth terminal as connection partner without having to establish a wireless connection prior to that.

In a further preferred embodiment, the comparator of the mobile Bluetooth device is adapted to determine a spatial relationship between a current device location of the mobile Bluetooth device and the first and second locations stored in the memory. Accordingly, the determination of the spatial relationship goes without having to request a location from a respective Bluetooth terminal itself.

The comparator of the mobile Bluetooth device may be adapted to engage with a locator unit, preferably a GPS unit and/or a cell-phone locator unit, to acquire the current device location as an absolute device location. The locator unit may be comprised by the mobile Bluetooth device. This provides for further simplification of the reconnection process as the current device location of the mobile Bluetooth device may be acquired without requiring user input.

The comparator may be further adapted to determine the spatial relationship by verifying whether the current device location of the mobile Bluetooth device lies within in a first vicinity of the first location. The comparator may also be adapted to determine the spatial relationship by verifying whether the current device location of the mobile Bluetooth device lies within in a second vicinity of the second location. The term "vicinity" denotes an area (or volume) covered by a Bluetooth terminal. A vicinity may be delimited by a maximal Bluetooth range of a respective Bluetooth terminal, wherein a maximal Bluetooth range may be 100 m (Bluetooth class 1, 20 dBm power), 10 m (Bluetooth class 2, 4 dBm power) or 1 m (Bluetooth class 3, 0 dBm power). A vicinity may also be delimited by a set of coordinates, e.g. coordinates defined by the limits of a ground plan or property. A vicinity may be stored in a memory of a mobile Bluetooth terminal. Two respective vicinities may be overlapping, partially overlapping or non-overlapping.

In a preferred embodiment, to provide a robust and easy-to-implement selection of a designated Bluetooth terminal, the selector is adapted to select a designated Bluetooth terminal such, that the first Bluetooth terminal is selected as a designated Bluetooth terminal if the current device location of the mobile Bluetooth device is within the first vicinity. The selector may be further adapted to select the second Bluetooth terminal as a designated Bluetooth terminal if the current device location of the mobile Bluetooth device is within the second vicinity.

In a further preferred embodiment the comparator is adapted to determine the signal strength of the first and/or the signal strength of the second Bluetooth terminal. The respective signal strength may be the Bluetooth signal strength at the current device location of the mobile Bluetooth device. This is advantageously if - for example - the mobile Bluetooth terminal is in Bluetooth range of both the first and the second Bluetooth terminal at the same time, which may be the case if the first and second vicinities partially overlap. The first and/or the second signal strength may be taken in account when deciding to which terminal the mobile Bluetooth device shall reconnect.

The comparator may be adapted to determine a first value indicative of a spatial relationship between a current device location of the mobile Bluetooth device and the first location and a second value indicative of a spatial relationship between the current device location and the second location. The comparator may also be adapted to determine a first value indicative of a spatial relationship between a current device location of the mobile Bluetooth device and the first location stored in the memory and a second value indicative of a spatial relationship between the current device location and the second location stored in the memory.

In a preferred embodiment the selector is adapted to select the first Bluetooth terminal as a designated Bluetooth terminal if the first value exceeds the second value and to select the second Bluetooth terminal as the designated Bluetooth terminal if the second value exceeds the first value. The selector may also be adapted to unselect the first Bluetooth terminal from the status designated Bluetooth terminal if the second value exceeds the first value and to unselect the second Bluetooth terminal from the status designated Bluetooth terminal if the first value exceeds the second value. This is especially suitable if the mobile Bluetooth device is to be connected to one of a large number of Bluetooth terminals, the Bluetooth terminals having vicinities of different spread and/or vicinities overlapping.

In a preferred embodiment the first value is the signal strength of the first Bluetooth terminal and the second value is the signal strength of the second Bluetooth terminal. The inventor recognizes that in most situations a user desires a mobile Bluetooth terminal to connect to a Bluetooth terminal closest to him or her. The inventor furthermore recognizes that the strength of a Bluetooth signal radiated from a Bluetooth terminal and determined at a current device location of the mobile Bluetooth device is a measure - at least an approximated measure - for a distance, the distance being a spatial relationship, between a mobile Bluetooth device and a respective one of a number of Bluetooth terminals of the same class, meaning having the same transmission power.

In a preferred embodiment, to compensate for different transmission powers of the Bluetooth terminals, the first value is the signal strength of the first Bluetooth terminal weighted with a value indicative of the transmission power of the first Bluetooth terminal and the second value is the signal strength of the second Bluetooth terminal weighted with a value indicative of the transmission power of the second Bluetooth terminal.

To further simplify a compensation for different transmission powers of the Bluetooth terminal, the memory of the mobile Bluetooth terminal may be adapted to store a class, a transmission power and/or a value indicative of a transmission power of a respective Bluetooth terminal the mobile Bluetooth device has been previously paired with.

In a preferred embodiment the mobile Bluetooth device is a hearing device, a hearing aid or hearing-aid streamer. A Bluetooth terminal may be a stationary Bluetooth terminal or a mobile Bluetooth terminal.

According to a second aspect of the current invention, the object is achieved by a method for engaging a mobile Bluetooth device in a wireless Bluetooth connection to a first Bluetooth terminal located at a first location and/or to a second Bluetooth terminal located at second location spaced apart from said first location, preferably wherein the mobile Bluetooth device has been previously paired with said first and second Bluetooth terminals, the method comprising:
- determining a spatial relationship between a current device location of the mobile Bluetooth device and the first and second locations using a comparator comprised by the mobile Bluetooth device;
- selecting from the first and second Bluetooth terminals a designated Bluetooth terminal by evaluating the spatial relationship determined by the comparator using a selector comprised by the mobile Bluetooth device; and
- initiating a reconnection between the mobile Bluetooth device and the designated Bluetooth terminal selected by the selector using a controller comprised by the mobile Bluetooth device.

In the following, embodiments of the second aspect of the invention are described. Additional features explained in the context of different embodiments may be combined with each other to form further embodiments, as long as they are not explicitly described as forming mutually exclusive alternatives to each other. It will be understood that the second aspect of the of the invention shares the corresponding advantages of the first aspect of the invention.

In a preferred embodiment the method comprises:
- pairing the mobile Bluetooth device with the first and second Bluetooth terminals and storing a respective location and/or a respective vicinity of said first and second Bluetooth terminals in a memory comprised by the mobile Bluetooth device,

In a further preferred embodiment the method comprises:
- determining a spatial relationship between a current device location of the mobile Bluetooth device and the first and second locations and/or the first and second vicinities stored in the memory comprised by the mobile Bluetooth device.

In an even further preferred embodiment the method comprises:
- acquiring the current device location as an absolute device location from a locator unit, preferably a GPS unit and/or a cell-phone locator unit.

In a further embodiment the method includes:
- determining the spatial relationship by verifying whether the current device location of the mobile Bluetooth device lies within in a first vicinity of the first location and/or within a second vicinity of the second location

In a further embodiment the method includes:
- selecting a designated Bluetooth terminal such, that the first Bluetooth terminal is selected as a designated Bluetooth terminal if the current device location of the mobile Bluetooth device is within the first vicinity, and the second Bluetooth terminal is selected as a designated Bluetooth terminal if the current device location of the mobile Bluetooth device is within the second vicinity.

In a further embodiment the method includes:
- determining a signal strength of the first and second Bluetooth terminals, the respective signal strength being the Bluetooth signal strength at the current device location of the mobile Bluetooth device.

In a further embodiment the method includes:
- determining a first value indicative of a spatial relationship between a current device location of the mobile Bluetooth device and the first location and a second value indicative of a spatial relationship between the current device location and the second location.

In a further embodiment the method includes:
- determining a first value indicative of a spatial relationship between a current device location of the mobile Bluetooth device and the first location stored in the memory and a second value indicative of a spatial relationship between the current device location and the second location stored in the memory.

In a further embodiment the method includes:
- selecting the first Bluetooth terminal as a designated Bluetooth terminal if the first value exceeds the second value and selecting the second Bluetooth terminal as the designated Bluetooth terminal if the second value exceeds the first value.

In a further embodiment the method includes:
- unselecting the first Bluetooth terminal from the status designated Bluetooth terminal if the second value exceeds the first value and unselecting the second Bluetooth terminal from the status designated Bluetooth terminal if the first value exceeds the second value.

In a further embodiment the method includes:
- setting the first value to be the signal strength of the first Bluetooth terminal and the second value to be the signal strength of the second Bluetooth terminal.

In a further embodiment the method includes:
- setting the first value to be the signal strength of the first Bluetooth terminal weighted with a value indicative of the transmission power of the first Bluetooth terminal and the second value to be the signal strength of the second Bluetooth terminal weighted with a value indicative of the transmission power of the second Bluetooth terminal.

In a further embodiment the method includes:
- storing a class, a transmission power and/or a value indicative of a transmission power of a respective Bluetooth terminal the mobile Bluetooth device has been previously paired with in the mobile Bluetooth device.

According to a third aspect of the current invention, the object is achieved by a computer program for operating a mobile Bluetooth device, the computer program comprising program code means for causing the mobile Bluetooth device to carry out the method of the second aspect of the invention.

### BRIEF DESCRIPTION OF THE DRAWINGS

Fig. 1 schematically depicts an embodiment of a mobile Bluetooth device according to the first aspect of the invention together with a first and a second Bluetooth terminal with non-overlapping vicinities,
Fig. 2 schematically depicts a further embodiment of a mobile Bluetooth device according to the second aspect together with a first and a second Bluetooth terminal with partially overlapping vicinities,
Fig. 3 schematically depicts, by means of a flow chart, an embodiment of an operating method for a mobile Bluetooth device in accordance with the second aspect of the invention, and
Fig. 4 schematically depicts, by means of a flow chart, a further embodiment of an operating method for a mobile Bluetooth device in accordance with the second aspect of the invention.

In the present context, a "hearing device" refers to a device, such as e.g. a hearing aid or an active ear-protection device, which is adapted to improve or augment the hearing capability of an individual by receiving acoustic signals from the individual's surroundings, modifying the acoustic signals electronically and providing audible signals to at least one of the individual's ears. Such audible signals may e.g. be provided in the form of acoustic signals radiated into the individual's outer ears, acoustic signals transferred as mechanical vibrations to the individual's inner ears through the bone structure of the individual's head and/or electric signals transferred directly or indirectly to the cochlear nerve of the individual. The hearing device may be configured to be worn in any known way, e.g. as a unit arranged behind the ear with a tube leading radiated acoustic signals into the ear canal or with a speaker arranged close to or in the ear canal, as a unit entirely or partly arranged in the pinna and/or in the ear canal, as a unit attached to a fixture implanted into the skull bone, etc. More generally, a hearing device comprises an input transducer for receiving an acoustic signal from an individual's surroundings and providing a corresponding electric input signal, a signal processing circuit for processing the electric input signal and an output transducer for providing an audible signal to the individual in dependence on the processed signal.

A "hearing system" refers to a system comprising one or two hearing devices, and a "binaural hearing system" refers to a system comprising one or two hearing devices and being adapted to provide audible signals to both of the individual's ears. Hearing systems or binaural hearing systems may further comprise "auxiliary devices", which communicate with the hearing devices and affect and/or benefit from the function of the hearing devices. Auxiliary devices may be e.g. remote control devices, audio gateway devices (i.e. streamers), mobile phones, public-address systems, car audio systems or music players. Hearing devices, hearing systems or binaural hearing systems may e.g. be used for compensating for a hearing-impaired person's loss of hearing capability or augmenting a normal-hearing person's hearing capability.

### MODE(S) FOR CARRYING OUT THE INVENTION

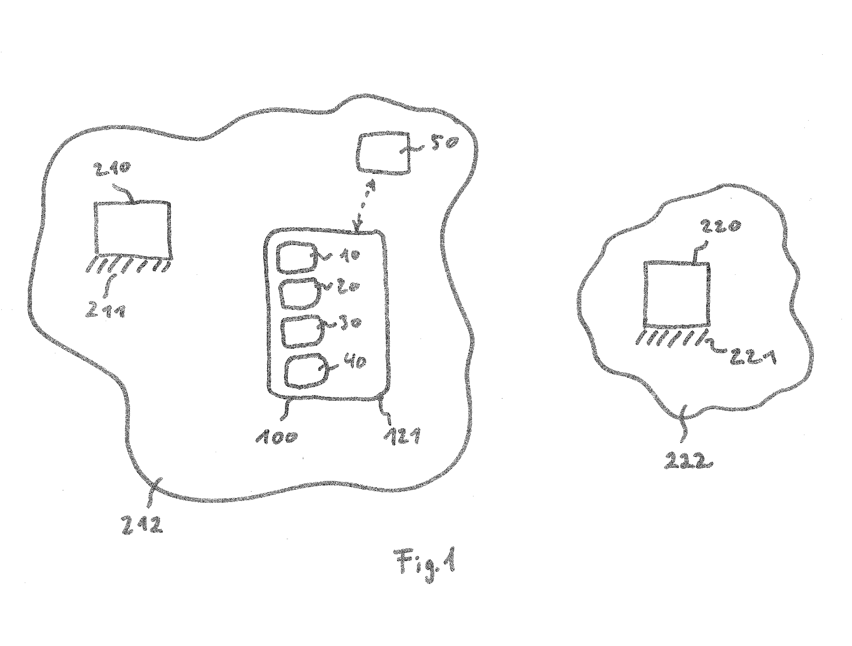

Depicted in Fig. 1 is a first Bluetooth terminal 210 being stationary located at first location 211 and a second Bluetooth terminal 220 being stationary located at second location 221. The first Bluetooth terminal 210, which may be provided as a landline phone adapter at a user's workplace, is surrounded by a first vicinity 212. The first vicinity 212 is delimited by a set of coordinates defined by the limits of said workplace. The second Bluetooth terminal 220, which may be provided as a landline phone adapter at the user's home, is surrounded by a second vicinity 222. The second vicinity 222 is delimited by a set of coordinates defined by the limits of said home. The first vicinity 212 and the second vicinity 222 do not overlap. This may be because the distance between the first Bluetooth terminal 210 located at work and the second Bluetooth terminal 220 located at home is larger than the Bluetooth range of either Bluetooth terminal 210, 220.

A mobile Bluetooth device 100 in Fig. 1, which may be a hearing device, a hearing aid or a hearing-aid streamer, is located at a current device location 121 (which is identical to the current location of a user wearing said mobile Bluetooth device 100). The mobile Bluetooth device 100 has been previously paired with the first Bluetooth terminal 210 and the second Bluetooth terminal 220. As may be seen, the mobile Bluetooth device 100, and consequently its current device location 121, is located within the first vicinity 212. Thus, the mobile Bluetooth device 100 is considered to be currently located at the workplace.

The mobile Bluetooth device 100 comprises a memory 10 holding in store, because the mobile Bluetooth device 100 has been previously paired with the first Bluetooth terminal 210 and the second Bluetooth terminal 220, the first location 211 in absolute coordinates and the second location 221 in absolute coordinates. If, for example, the mobile Bluetooth device has been previously paired with three Bluetooth terminals, the memory would hold three locations in store.

The mobile Bluetooth device 100 further comprises a comparator 20 that is adapted to determine a spatial relationship between the current device location 121 of the mobile Bluetooth device 100 and the first 211 and second 221 locations stored in the memory 10. The comparator 20 determines the spatial relationship by verifying whether the current device location 121 of the mobile Bluetooth device 100 lies, for example in terms of absolute coordinates, within the first vicinity 212 of the first location 211 or, for example in terms of absolute coordinates, within the second vicinity 222 of the second location 221. To acquire the current device location 121 as an absolute device location in terms of absolute coordinates, the comparator 20 is adapted to engage with a locator unit 50, which may be e.g. a GPS unit of a Smartphone carried by the user or be a corresponding unit integrated in the mobile Bluetooth device 100.

The mobile Bluetooth device 100 also comprises a selector 30 adapted to select from the first 210 and second 220 Bluetooth terminals a designated Bluetooth terminal such, that the first Bluetooth terminal 210 is selected as a designated Bluetooth terminal if the current device location 121 of the mobile Bluetooth device 100 is within the first vicinity 212, and the second Bluetooth terminal 220 is selected as a designated Bluetooth terminal if the current device location 121 of the mobile Bluetooth device 100 is within the second vicinity 222. Since, as may be seen from Fig.1, the current device location 121 of mobile Bluetooth device 110 is located within the first vicinity 212, the selector 30 selects the first Bluetooth terminal 210 as designated Bluetooth terminal.

A controller 40 comprised by the mobile Bluetooth device 100 is adapted to initiate a reconnection between the mobile Bluetooth device 100 and the designated Bluetooth terminal selected by the selector 30. Since the selector 30 selected the first Bluetooth terminal 210 as designated Bluetooth terminal, the controller 40 initiates a reconnection to this first Bluetooth terminal 210.

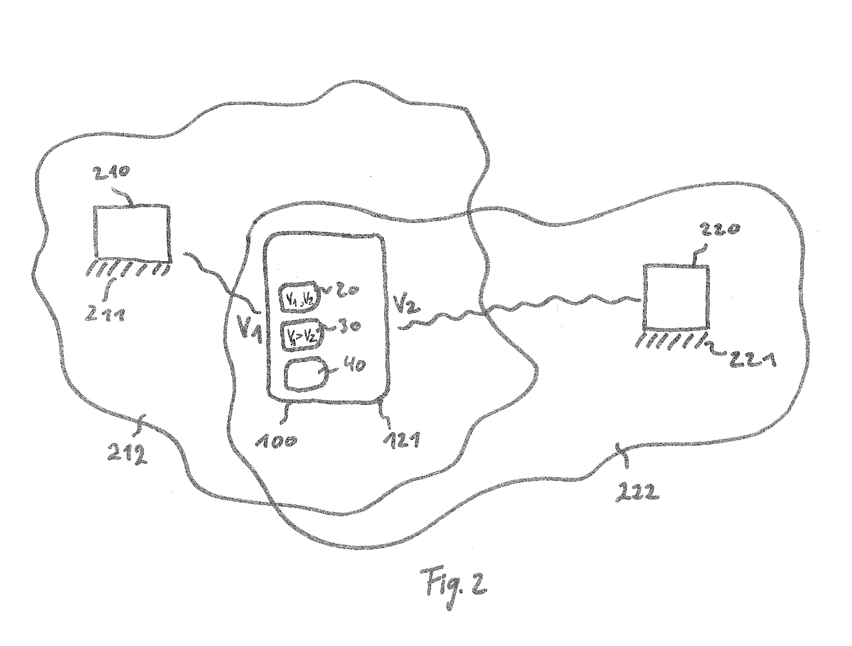

Depicted in Fig. 2 is a first Bluetooth terminal 210 being stationary located at first location 211 and a second Bluetooth terminal 220 being stationary located at second location 221. The first Bluetooth terminal 210, which may be provided as a first TV adapter in a first room at a user's home, is surrounded by a first vicinity 212. The first vicinity 212 is delimited by the Bluetooth range of the first Bluetooth terminal 210. The second Bluetooth terminal 220, which may be provided as a second TV adapter in a second room at a user's home, is surrounded by a second vicinity 222. The second vicinity 222 is delimited by the Bluetooth range of the second Bluetooth terminal 220. The first vicinity 212 and the second vicinity 222 partially overlap. This may be because the distance between the first Bluetooth terminal 210 located in the first room and the second Bluetooth terminal 220 located in the second room is smaller than the Bluetooth range of either Bluetooth terminal 210, 220.

A mobile Bluetooth device 100 in Fig. 2, which may be e.g. a hearing device, a hearing aid or a hearing-aid streamer, is located at a current device location 121 (which is identical to the current location of a user wearing said mobile Bluetooth device 100). The mobile Bluetooth device 100 has been previously paired with the first Bluetooth terminal 210 and the second Bluetooth terminal 220. As may be seen, the mobile Bluetooth device 100, and consequently its current device location 121, is located within the first vicinity 212 and the second vicinity 222. Thus, the mobile Bluetooth device 100 is considered to be currently located in Bluetooth range to the first and the second TV adaptor.

The mobile Bluetooth device 100 comprises a comparator 20 adapted to determine a spatial relationship between a current device location 121 of the mobile Bluetooth device 100 and the first 211 and second 221 locations. This is performed by the comparator 20 by determining a signal strength of the first 210 and second 220 Bluetooth terminals, the respective signal strength being the Bluetooth signal strength at the current device location 121 of the mobile Bluetooth device 100 and assigning a first value V1 to be the signal strength of the first Bluetooth terminal 210 and a second value V2 to be the signal strength of the second Bluetooth terminal 220. Thereby the first value V1 is indicative of a spatial relationship, namely a distance, between a current device location 121 of the mobile Bluetooth device 100 and the first location 211 and a second value V2 is indicative of a spatial relationship, namely a distance, between the current device location 121 and the second location 221. The first Bluetooth terminal 210 and the second Bluetooth terminal 220 are of the same class, meaning having the same transmission power. Because the mobile Bluetooth terminal 100 is located closer to the first Bluetooth terminal 210 than to the second Bluetooth terminal 220, the signal strength of the first Bluetooth terminal 210 determined by the comparator 20 is larger than the signal strength of the second Bluetooth terminal 220 determined by the comparator 20. Consequently the first value V1 exceeds the second value V2.

The mobile Bluetooth device 100 furthermore comprises a selector 30 adapted to select the first Bluetooth terminal 210 as a designated Bluetooth terminal if the first value V1 exceeds the second value V2 and to select the second Bluetooth terminal 220 as the designated Bluetooth terminal if the second value V2 exceeds the first value V1. As in the example of Fig. 1 the first value V1 exceeds the second value V2, the selector 30 selects the first Bluetooth terminal 210 as a designated Bluetooth terminal.

A controller 40 comprised by the mobile Bluetooth device 100 is adapted to initiate a reconnection between the mobile Bluetooth device 100 and the designated Bluetooth terminal selected by the selector 30. Since the selector 30 selected the first Bluetooth terminal 210 as designated Bluetooth terminal, the controller 40 initiates a reconnection to this first Bluetooth terminal 210.

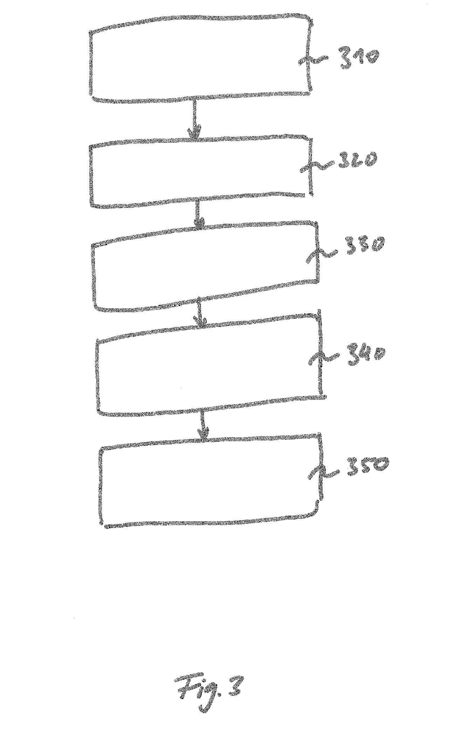

In a first step 310 in Fig. 3 a mobile Bluetooth device is paired with the first and second Bluetooth terminals. A respective location and a respective vicinity of said first and second Bluetooth terminals are stored in a memory comprised by the mobile Bluetooth device. Thereafter, the mobile Bluetooth device is considered to have been previously paired with the first and second Bluetooth terminals.

Before executing the following steps described below, the mobile Bluetooth terminal is in a state without any momentary communicative connection to any of the Bluetooth terminals it has been previously paired with.

In a second step 320 the mobile Bluetooth device acquires its current device location as an absolute device location, for example from a Smartphones' locator unit via the comparator comprised by the mobile Bluetooth device.

In a third step 330 a spatial relationship is determined by verifying whether the current device location of the mobile Bluetooth device lies within in a first vicinity of the first location and/or within a second vicinity of the second location stored in the memory of the mobile Bluetooth device.

In a fourth step 340 from the first and second Bluetooth terminals a designated Bluetooth terminal is selected such that the first Bluetooth terminal is selected as a designated Bluetooth terminal if the current device location of the mobile Bluetooth device is within the first vicinity, and the second Bluetooth terminal is selected as a designated Bluetooth terminal if the current device location of the mobile Bluetooth device is within the second vicinity.

In a fifth step 350 a reconnection between the mobile Bluetooth device and the designated Bluetooth terminal selected in the fourth step 340 is initiated.

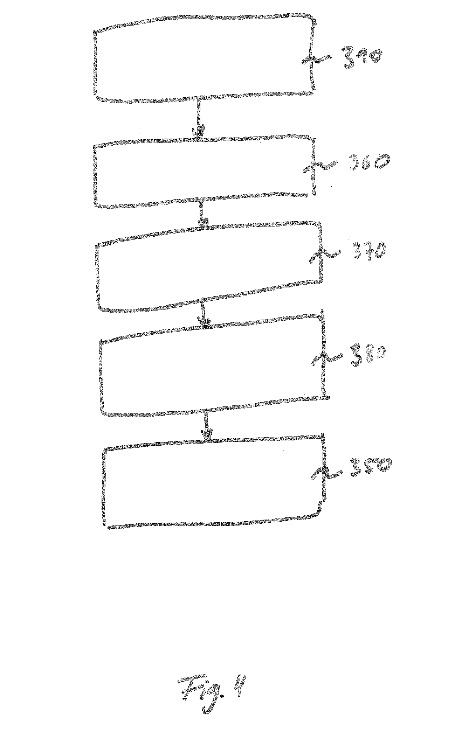

In a first step 310 in Fig. 4 a mobile Bluetooth device is paired with the first and second Bluetooth terminals. A respective location and a respective vicinity of said first and second Bluetooth terminals are stored in a memory comprised by the mobile Bluetooth device. Afterwards the mobile Bluetooth device is considered to have been previously paired with the first and second Bluetooth terminals.

In a second step 360 a signal strength of the first and second Bluetooth terminals is determined by the comparator comprised by the mobile Bluetooth device, the respective signal strength being the Bluetooth signal strength at the current device location of the mobile Bluetooth device.

In a third step 370 a first value indicative of a spatial relationship between a current device location of the mobile Bluetooth device and the first location is set to be the signal strength of the first Bluetooth terminal. Furthermore a second value indicative of a spatial relationship between the current device location and the second location is set to be the signal strength of the second Bluetooth terminal.

In a fourth step 380 the first Bluetooth terminal is selected as a designated Bluetooth terminal if the first value exceeds the second value and the second Bluetooth terminal is selected as the designated Bluetooth terminal if the second value exceeds the first value.

In a fifth step 350 a reconnection between the mobile Bluetooth device and the designated Bluetooth terminal selected in the fourth step 340 is initiated.

The steps described with respect to Fig. 4 may be executed consecutively to the steps described with respect to Fig. 3 to form a further embodiment according to the second aspect of the invention.

The invention may be implemented in systems and/or methods using other communication standards than Bluetooth, provided such systems and/or methods allow the use of secured connections, which require pairing of participating devices before they may communicate via the secured connections.

## Claims

1. Mobile Bluetooth device (100) for engaging in a wireless Bluetooth connection to a first Bluetooth terminal (210) located at a first location (211) and to a second Bluetooth terminal (220) located at a second location (221) spaced apart from said first location (211), wherein the mobile Bluetooth device (100) has been previously paired with said first (210) and second (220) Bluetooth terminals and comprises:
- a comparator (20) adapted to determine a spatial relationship between a current device location (121) of the mobile Bluetooth device (100) and the first (211) and second (221) locations;
- a selector (30) adapted to select from the first (210) and second (220) Bluetooth terminals a designated Bluetooth terminal by evaluating the spatial relationship determined by the comparator (20); and
- a controller (40) adapted to initiate a reconnection between the mobile Bluetooth device (100) and the designated Bluetooth terminal selected by the selector (30).

2. Mobile Bluetooth device (100) according to claim 1, comprising a memory (10) adapted to store a location (211, 221) and/or a vicinity (212, 222) of a Bluetooth terminal (210, 220) the mobile Bluetooth device (100) has been previously paired with, namely at at least said first (211) and second (221) locations.

3. Mobile Bluetooth device (100) according to claim 2, wherein the comparator (20) is adapted to determine a spatial relationship between a current device location (121) of the mobile Bluetooth device (100) and the first (211) and second (221) locations and/or the first (212) and second (222) vicinities stored in the memory (10).

4. Mobile Bluetooth device (100) according to any of the claims 1 to 3, wherein the comparator (20) is adapted to engage with a locator unit (50), preferably a GPS unit and/or a cell-phone locator unit, to acquire the current device location (121) as an absolute device location.

5. Mobile Bluetooth device (100) according to any of the claims 1 to 4, wherein the comparator (20) is adapted to determine the spatial relationship by verifying whether the current device location (121) of the mobile Bluetooth device (100) lies within in a first vicinity (212) of the first location (211) and/or within a second vicinity (222) of the second location (221), the vicinities (212, 222) being delimited preferably by a maximal Bluetooth range of the respective Bluetooth terminal (210, 220).

6. Mobile Bluetooth device (100) according to claim 5, wherein the selector (30) is adapted to a select a designated Bluetooth terminal such, that the first Bluetooth terminal (210) is selected as a designated Bluetooth terminal if the current device location (121) of the mobile Bluetooth device (100) is within the first vicinity (212), and the second Bluetooth terminal (220) is selected as a designated Bluetooth terminal if the current device location (121) of the mobile Bluetooth device (100) is within the second vicinity (222).

7. Mobile Bluetooth device (100) according to any of the claims 1 to 6, wherein the comparator (20) is adapted to determine a signal strength of the first (210) and second (220) Bluetooth terminals, the respective signal strength being the Bluetooth signal strength at the current device location (121) of the mobile Bluetooth device (100).

8. Mobile Bluetooth device (100) according to any of the claims 1 to 7, wherein the comparator (20) is adapted to determine a first value (V1) indicative of a spatial relationship between a current device location (121) of the mobile Bluetooth device (100) and the first location (211) and a second value (V2) indicative of a spatial relationship between the current device location (121) and the second location (221).

9. Mobile Bluetooth device (100) according to claim 8, wherein the selector (30) is adapted to select the first Bluetooth terminal (210) as a designated Bluetooth terminal if the first value (V1) exceeds the second value (V2) and to select the second Bluetooth terminal (220) as the designated Bluetooth terminal if the second value (V2) exceeds the first value (V1).

10. Mobile Bluetooth device (100) according to any of the claims 8 or 9, wherein the first value (V1) is the signal strength of the first Bluetooth terminal (210) and the second value (V2) is the signal strength of the second Bluetooth terminal (220).

11. Method for engaging a mobile Bluetooth device in a wireless Bluetooth connection to a first Bluetooth terminal located at a first location and/or to a second Bluetooth terminal located at second location spaced apart from said first location, preferably wherein the mobile Bluetooth device has been previously paired with said first and second Bluetooth terminals, the method comprising:
- determining (330, 360) a spatial relationship between a current device location of the mobile Bluetooth device and the first and second locations using a comparator comprised by the mobile Bluetooth device;
- selecting (340, 380) from the first and second Bluetooth terminals a designated Bluetooth terminal by evaluating the spatial relationship determined by the comparator using a selector comprised by the mobile Bluetooth device; and
- initiating (350) a reconnection between the mobile Bluetooth device and the designated Bluetooth terminal selected by the selector using a controller comprised by the mobile Bluetooth device.

12. Method according to claim 11, further comprising:
- pairing the mobile Bluetooth device with the first and second Bluetooth terminals and storing (310) a respective location and/or a respective vicinity of said first and second Bluetooth terminals in a memory comprised by the mobile Bluetooth device;
- acquiring (320) the current device location as an absolute device location from a locator unit, preferably a GPS unit and/or a cell-phone locator unit;
- determining (330) the spatial relationship by verifying whether the current device location of the mobile Bluetooth device lies within in a first vicinity of the first location and/or within a second vicinity of the second location stored in the memory of the mobile Bluetooth device; and
- selecting (350) a designated Bluetooth terminal such, that the first Bluetooth terminal is selected as a designated Bluetooth terminal if the current device location of the mobile Bluetooth device is within the first vicinity, and the second Bluetooth terminal is selected as a designated Bluetooth terminal if the current device location of the mobile Bluetooth device is within the second vicinity.

13. Method according to any of the claims 11 or 12, further comprising:
- determining (360) a signal strength of the first and second Bluetooth terminals, the respective signal strength being the Bluetooth signal strength at the current device location of the mobile Bluetooth device;
- setting (370) a first value indicative of a spatial relationship between a current device location of the mobile Bluetooth device and the first location to be the signal strength of the first Bluetooth terminal and a second value indicative of a spatial relationship between the current device location and the second location to be the signal strength of the second Bluetooth terminal; and
- selecting (380) the first Bluetooth terminal as a designated Bluetooth terminal if the first value exceeds the second value and the second Bluetooth terminal as the designated Bluetooth terminal if the second value exceeds the first value.

14. A computer program for operating a mobile Bluetooth device, the computer program comprising program code means for causing the mobile Bluetooth device to carry out the method of any of the claims 11 to 13.
